(19) Europäisches Patentamt
European Patent Office
Office européen des brevets

(11) EP 1 538 790 A2

(12) **EUROPEAN PATENT APPLICATION**

(43) Date of publication:
**08.06.2005 Bulletin 2005/23**

(51) Int Cl.[7]: **H04L 12/56**, H04Q 7/38

(21) Application number: **04028884.7**

(22) Date of filing: **06.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **05.12.2003 KR 2003088188**

(71) Applicants:
- **Samsung Electronics Co., Ltd.**
  **Suwon-si, Gyeonggi-do (KR)**
- **Seoul National University Industry Foundation**
  **Seoul (KR)**

(72) Inventors:
- **Park, Dae-Young**
  **Seoul (KR)**
- **Yun, Sang-Boh**
  **c/o Samsung Electronics Co. Ltd.**
  **Suwon-si Gyeonggi-do (KR)**
- **Cho, Sung-Hyun**
  **c/o Samsung Electronics Co. Ltd.**
  **Suwon-si Gyeonggi-do (KR)**
- **Park, Won-Hyoung**
  **c/o Samsung Electronics Co. Ltd.**
  **Suwon-si Gyeonggi-do (KR)**
- **Kwon, Ho-Joong**
  **Seoul (KR)**
- **Seo, Han-Byul**
  **Busan (KR)**
- **Lee, Byeong-Gi**
  **Seoul (KR)**

(74) Representative: **Grünecker, Kinkeldey, Stockmair & Schwanhäusser Anwaltssozietät**
**Maximilianstrasse 58**
**80538 München (DE)**

(54) **Packet scheduling method using cumulative distribution function**

(57) A packet scheduling method using a cumulative distribution function. The scheduling method for use in a communication system including a plurality of MSs (Mobile Stations) and a central controller for assigning resources to individual MSs on the basis of a transmission rate associated with downlink channels fed back from the MSs, includes the steps of generating a uniform random variable of transmission rates of individual MSs; converting the uniform random variable into a scheduling priority; comparing the scheduling priority of each MS with each other; and assigning resources to a MS having the highest scheduling priority.

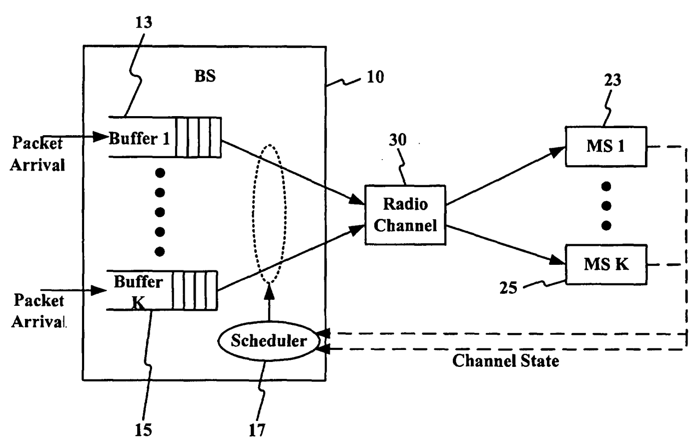


FIG.1



Printed by Jouve, 75001 PARIS (FR)

## Description

The present invention relates to a wireless communication system, and more particularly to a packet scheduling method using a cumulative distribution function of a transmission rate for every terminal in a wireless communication system.

With the increasing development of wireless communication technologies, a typical voice service and a variety of multimedia data services in the mobile communication field have continued to be enhanced and developed.

In order to efficiently provide a multimedia service requiring a high-speed transmission rate in a mobile communication network, a variety of technologies are used, for example, an HDR (High Data Rate) for a CDMA (Code Division Multiple Access) scheme, and an HSDPA (High Speed Downlink Packet Access) scheme for the 3GPP (3rd Generation Partnership Project), etc., such that a variety of scheduling algorithms are to efficiently provide high-speed multimedia services and to maximize system capacity.

Provided that a wireless channel acting as a time-varying channel transmits the data traffic, which is less sensitive to transmission delay as compared to voice traffic, only when good channel states are supplied to individual users, can the wireless channel acquire a high transmission rate. A representative example of the above technology is a CDMA 1x EV/DO downlink data transmission scheme. The CDMA 1x EV/DO system feeds its own highest transmission rate to a base station. The base station receives transmission rates from all the terminals, and carries out a packet scheduling operation based on the received transmission rates.

The scheduling method having the highest average transmission rate is an MR (Maximum Rate) scheduling method for unconditionally selecting a terminal requesting the highest transmission rate from among a plurality of terminals. However, all of the users do not always use the same channel so that there arises a difference in average transmission rates of the users according to channel environments, resulting in an unequal application of the transmission rate scheduling. In order to solve the aforementioned problem, there has recently been proposed a variety of scheduling algorithms, for example, a PF (Proportional Fair) scheduling algorithm, and an Opportunistic Transmission (OT) scheduling algorithm, etc.

The PF scheduling algorithm selects a user having a current feedback transmission rate greater than an average transmission rate of individual users, such that it can proportionally and fairly distribute system resources among the users. However, the PF scheduling algorithm assumes that the ratio of a current instantaneous transmission rate and an average transmission rate is equally distributed to all the users. Therefore, if the above assumption is not satisfied, a user having an average-high transmission rate can receive many more services than a user having an average-low transmission rate, such that users assigned to inferior channels may experience inconvenience while using their desired services. Furthermore, the PF scheduling algorithm has another disadvantage in that it is unable to supply different QoSs (Quality of Services) for different users.

The opportunistic transmission scheduling algorithm determines a predetermined ratio indicative of the number of average service times of the individual users in advance, and maximizes the sum of the average transmission rates of individual users such that a ratio indicative of the number of average service times is satisfied. The opportunistic transmission scheduling algorithm can adjust only average service ratios of individual users, such that a user having a superior channel has an advantage over a user having an inferior channel in the same way as in the PF scheduling algorithm.

For example, in the case of scheduling two users, it is assumed that a first user has an average transmission rate of 100, a second user has an average transmission rate of 20, the first and second users adapt the Gaussian Distribution, and the ratio of the number of average service times of individual users is 1:1. Provided that a feedback value of the first user is 121, and a feedback value of the second user is 40, the opportunistic transmission scheduling algorithm allows the first user to have a difference of 21 between a current transmission rate and an average transmission rate, and allows the second user to have a difference of 20 between a current transmission rate and an average transmission rate, such that the first user is selected by the opportunistic transmission scheduling algorithm. However, the first user receives a transmission rate greater than an average transmission rate by 21 %, and the second user receives a transmission rate greater than an average transmission rate by 100%, such that the second user is unable to receive a desired service even though a superior channel environment generated at rare intervals is provided. Therefore, in order to provide the second user with a desired service, the channel state of the first user must be inferior to that of the second user, such that an average transmission rate for the second user is decreased. Provided that a third user having an average transmission rate of 10, instead of the first user, enters into competition with the second user, the second user has an advantage over the third user. In more detail, due to a relative relationship between a reference user's channel and another user's channel, a difference in average transmission rates of the users occurs. In conclusion, the users who participate in the competition have different average transmission rates. In this case, provided that different QoSs are assigned to transmission rates for every user, there is no solution to adjust such different QoSs.

Therefore, the present invention has been made in view of at least the above problems.

It is the object of the present invention to provide a wireless packet scheduling method for numerically expressing a relationship between a current transmission rate an ideal transmission rate upon receiving feedback information from individual users indicating the number of times the ideal transmission rate occurs, comparing the numerical result of one user with those of other users, selecting one user who has the highest numerical result from among a plurality of users, and performing a scheduling process for the selected user having the highest numerical result.

This object is solved by the subject matter of the independent claims.

Preferred embodiments are defined in the dependent claims.

It is an aspect of the present invention to provide a wireless packet scheduling method for comparing current transmission rate information of a specific user with previous feedback transmission rate information, to absolutely compare the transmission rates of all users who have different transmission rate distributions, resulting in an improved fairness.

In accordance with one aspect of the present invention, the above and other objects can be accomplished by the provision of a scheduling method for use in a communication system including a plurality of MSs (Mobile Stations) and a central controller for assigning resources to individual MSs on the basis of a transmission rate associated with downlink channels fed back from the MSs, comprising the steps of generating a uniform random variable of transmission rates for each MS; converting the uniform random variable into a scheduling priority; comparing the scheduling priorities of the MSs with each other; and assigning resources to a MS having the highest scheduling priority.

Preferably, the uniform random variable is a cumulative distribution function of transmission rates of the MSs.

In accordance with another aspect of the present invention, there is provided a scheduling method for use in a wireless communication system including k MSs (Mobile Stations) and a BS (Base Station) for selecting one MS to be assigned with an n-th timeslot on the basis of transmission rate information $m_k(n)$ associated with downlink channels fed back from an MS 'k', comprising the steps of: generating a uniform random variable $U_k(n)$ using transmission rate information received from an individual MS 'k'; converting the uniform random variable $U_k(n)$ into a scheduling priority $U_k(n)^{1/w_k}$; comparing the scheduling priority $U_k(n)^{w_k}$ of each MS with each other; and assigning the n-th timeslot to a MS having the highest scheduling priority $U_k(n)^{w_k}$ (where,

$$\sum_{k=1}^{K} w_m = 1$$

). Preferably, the uniform random variable $U_k(n)$ is a cumulative distribution function $F_{R_k}(r)$ of a transmission rate $R_k(n)$ corresponding to the transmission rate information $m_k(n)$. Preferably, the cumulative distribution function $F_{R_k}(r)$ is updated using a probability density function associated with the transmission rate. Preferably, the step of updating the cumulative distribution function $F_{R_k}(r)$ further includes the step of, if the probability density function is set to $P_{k,m} \equiv \Pr(R_k(n) = r_{k,m})$ and the cumulative distribution function is set to

$$q_{k,m} \equiv \sum_{i=1}^{m} p_{k,i}$$

, updating the probability density function using an equation denoted by $p_{k,m} \leftarrow \lambda p_{k,m} + (1 - \lambda) 1_{m=m_k(n)}$ (where, $\lambda$ is $0<\lambda<1$, and $1_A$ is an indicator which is set to '1' when the condition 'A' is satisfied or is set to '0' when the condition 'A' is not satisfied); and updating the cumulative distribution function using an equation

$$q_{k,m} \leftarrow \sum_{i=1}^{m} p_{k,i} .$$

The above features and other advantages of the present invention will be more clearly understood from the following detailed description taken in conjunction with the accompanying drawings, in which:

Fig. 1 is a diagram illustrating a wireless access network for use with a wireless packet scheduling method in accordance with a preferred embodiment of the present invention;

Fig. 2 is a flow chart illustrating a wireless packet scheduling method in accordance with a preferred embodiment of the present invention;

Fig. 3 is a graph comparing an inventive scheduling method, an MR scheduling method, and an opportunistic transmission scheduling method in consideration of scheduling fairness in accordance with a preferred embodiment of the present invention; and

Fig. 4 is a graph comparing an inventive scheduling method and an opportunistic transmission scheduling method

in consideration of other terminals' distribution effects associated with an average service reception quantity in accordance with a preferred embodiment of the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may obscure the subject matter of the present invention.

The present invention relates to a wireless packet scheduling method for determining a scheduling priority (also called a scheduling metric factor) using statistical characteristics of channel information fed back from a terminal to a base station, and improves the fairness of a current wireless channel scheduling algorithm, so that it can satisfy different QoSs of a plurality of users.

Fig. 1 is a diagram illustrating a wireless access network for use with a wireless packet scheduling method in accordance with a preferred embodiment of the present invention.

Referring to Fig. 1, a base station BS 10 provides individual user equipment denoted by MS (Mobile Station) 23 and MS 25 with data services over a wireless channel 30. The BS 10 includes buffers 13 and 15 for receiving/storing packet data to be transmitted to the MS 23 and MS 25. The scheduler 17 transmits data stored in the buffers 13 and 15 to corresponding MS 23 and MS 25 in descending priority order. The scheduler 17 assigns scheduling priorities (i. e., scheduling metric factors) to individual MSs using channel state information periodically fed back from the MS 23 and MS 25.

Individual MS 23 and MS 25 contained in the aforementioned wireless access network measure a downlink channel, calculate a maximum rate (MR) supportable from the downlink channel, and feed back the calculated MR to the BS 10.

The scheduler 17 of the BS 10 extracts the MR information from feedback information received from individual MS 23 and MS 25, estimates a channel distribution (i.e. a histogram) associated with MS 'k' (k = 1, 2, ..., K; where K is the total number of MSs), and generates a cumulative distribution function (cdf) $F_{R_k}(r)$ (where, k = 1, 2, ..., K). The scheduler 17 acquires priority of a timeslot 'n' of individual user 'k' using the cumulative distribution function (cdf). Priority k*(n) of a user 'k' in the n-th timeslot is calculated by the following Equation 1:

$$k^*(n) = \arg\max_k [F_{R_k}(R_k(n))]^{1/w_k} \quad \ldots\ldots\ldots(1)$$

With reference to Equation 1, $R_k(n)$ is a maximum rate (MR) capable of being transmitted to the MS 'k' over the timeslot 'n', and $w_k$ indicative of a weight factor assigned to the MS 'k' is determined by

$$\sum_{k=1}^{K} w_k = 1 .$$

The scheduler 17 compares priorities k*(n) associated with MS k as calculated by Equation 1, so that it assigns the n-th timeslot to an MS having the highest priority.

Fig. 2 is a flow chart illustrating a wireless packet scheduling method in accordance with a preferred embodiment of the present invention.

The scheduling method of the present invention assumes that K MSs compete with each other to receive their resources, and an MR of MS 'k' is determined to be $R_k(n) \in \{r_{k,1}, r_{k,2}, \ldots, r_{k,M}\}$, $r_{k,1} < \ldots < r_{k,M}$. Provided that $r_{k,m_k(n)}$ is determined to be an MR, the MS 'k' feeds back a transmission rate index $m_k(n) \in \{1,2,\ldots M\}$ of the n-th timeslot to the BS. A probability density function (pdf) associated with the transmission rate of the MS 'k' is $p_{k,m} \equiv \Pr(R_k(n) = r_{k,m})$, and a cumulative distribution function (cdf)

$$q_{k,m} \equiv \sum_{i=1}^{m} p_{k,i}$$

(where k=1, 2, ..., K, and m=1, 2, ..., M). For the convenience of description, $q_{k,0}$ is zero.

Referring to Fig. 2, according to the wireless packet scheduling method of the present invention, an MS 'k' feeds back a transmission rate index $m_k(n)$ to the BS at step S21. Upon receiving the transmission rate index $m_k(n)$ at step S21, the scheduler of the BS generates a uniform random variable $U_k(n)$ at intervals of $[q_{k,m_{k(n)-1}}, q_{k,m_{k(n)}}]$ at step S22, and converts the uniform random variable $U_k(n)$ into scheduling metric information $U_k(n)^{1/w_k}$ associated with the

MS 'k' at step S23. In this case, the scheduling metric factor $U_k(n)^{1/w_k}$ can also be considered to be scheduling priority information.

The scheduler acquires scheduling priority information of individual MSs, compares the scheduling priority information of the individual MSs, and selects a MS having the highest priority from among the MSs at step S24. In this case, a maximum rate (MR) can be represented by the following Equation 2:

$$k^*(n) = \arg\max_k U_k(n)^{1/w_k} \quad \text{........(2)}$$

If the MS having the highest priority is selected, the BS assigns the n-th timeslot to the MS k*(n) having the highest priority, and transmits data to the MS k*(n) at step S25. A probability density function (pdf) $p_{k,m}$ and a cumulative distribution function $q_{k,m}$ of a corresponding MS can be represented by the following Equations 3 and 4, respectively:

$$P_{k,m} \leftarrow \lambda p_{k,m} + (1-\lambda)1_{m=m_k(n)} \quad (3)$$

$$q_{k,m} \leftarrow \sum_{i=1}^{m} p_{k,i} \quad \text{........(4)}$$

With reference to Equations 3 and 4, λ is 0 < λ < 1, and $1_A$ is an indicator, where A represents the condition $m=m_k(n)$. The value of $1_A$ is '1' when the condition 'A' is satisfied, i.e. when m equals $m_k(n)$, and is '0' when the condition 'A' is not satisfied.

Fig. 3 is a graph comparing an inventive scheduling method, an MR scheduling method, and an opportunistic transmission scheduling method in consideration of scheduling fairness in accordance with a preferred embodiment of the present invention.

The aforementioned simulation for comparing performances of the individual scheduling methods is provided at a predetermined condition in which the number K of overall MSs is 5, average transmission rates of individual users are each set to 'm=10', standard deviations $\sigma_k$ of an individual user k (where k=1, 2, 3, 4, and 5) is determined to be 1.2, 1.4, 1.6, 1.8, and 2.0, respectively.

Referring, to Fig. 3, the MR scheduling method shows unequal allocation of transmission times of individual MSs, such that an MS having a larger variation occupies a longer transmission time. On the other hand, the opportunistic transmission method and the inventive scheduling method indicate that individual MSs occupy almost the same transmission time.

Fig. 4 is a graph comparing an inventive scheduling method and an opportunistic transmission scheduling method in consideration of other terminals' distribution effects associated with an average service reception quantity in accordance with a preferred embodiment of the present invention. In this simulation of Fig. 4, a standard deviation of the fifth user is divided into two values 1 and 2 on the condition that distributions of other users are maintained in such 'a way that the graph of Fig. 4 is provided.

As can be seen from Fig. 4, the opportunistic transmission algorithm changes an average service reception quantity of each MS according to a standard deviation variation of the fifth MS (i.e., a fifth MS's distribution). Therefore, the higher the standard deviation of the fifth terminal, the lower the average service reception quantity of a specific MS. Furthermore, the opportunistic transmission algorithm is unable to maintain the ratio of a scheduling gain and a standard deviation.

On the other hand, the scheduling method of the present invention can control the first to fourth MSs to maintain the same average server reception quantity, irrespective of the standard deviation variation of the fifth MS.

As can be seen from the comparison simulations of Figs. 3 and 4, the scheduling method of the present invention has a performance superior to that of the opportunistic transmission method in association with fairness or scheduling gain field.

As apparent from the above description, the scheduling method of the present invention selects an MS to be scheduled on the basis of a reception rate distribution of a specific MS, irrespective of probability distributions of other MSs, so that it can predict in advance the average service reception rates of individual users. Although several MSs have non-identical channels, individual MSs are operated as if their channels were identical with channels of other MSs. Although individual MSs have different requirements, the scheduling method of the present invention can provide

individual MSs with effective services. Furthermore, the scheduling method of the present invention can easily increase an average transmission rate of a user having an inferior channel until reaching a predetermined transmission rate.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A scheduling method for use in a communication system including a plurality of MSs and a central controller for assigning resources to the MSs on the basis of transmission rates of downlink channels, the transmission rates being fed back from the MSs, comprising the steps of:

   generating a uniform random variable of the transmission rates for each MS;
   converting the uniform random variable into a scheduling priority;
   comparing the scheduling priority of each MS with each other; and
   assigning resources to an MS having the highest scheduling priority.

2. The method of claim 1, wherein the uniform random variable is a cumulative distribution function of transmission rates of the MS.

3. The method of claim 1, wherein the step of generating the uniform random variable, further includes the steps of:

   periodically receiving the transmission rates fed back from the MSs;
   generating a cumulative distribution function based on the received transmission rates; and
   generating a uniform random variable using the cumulative distribution function.

4. A scheduling method for use in a wireless communication system including a plurality of MSs and a BS for assigning specific resources to the MSs on the basis of transmission rate indicators associated with downlink channels, the transmission rate indicators being fed back from the MSs, comprising:

   generating uniform random variables based on the transmission rate indicators;
   converting the uniform random variables into scheduling priorities;
   comparing the scheduling priorities of the MSs with each other; and
   assigning a timeslot to an MS having a highest scheduling priorities.

5. The method of claim 4, wherein the uniform random variable is a cumulative distribution function of the transmission rate indicators fed back from each MS.

6. The method of claim 4, wherein assigning the specific resources to the MSs by the BS comprises assigning an n-th timeslot to an MS on the basis of transmission rate indicators of downlink channels.

7. The method of claim 6, wherein the generation of the uniform random variables is based on transmission rates corresponding to the transmission rate indicators from each MS; and
   the assigned time slot is the n-th timeslot.

8. The method of claim 7, wherein the uniform random variable is a cumulative distribution function of the transmission rates represented by the transmission rate indicators fed back from each MS.

9. The method of claim 6, wherein the plurality of MSs are a number of k MSs.

10. The method of claim 9, wherein the BS selects one MS for assigning the n-th timeslot on the basis of transmission rate indicators providing transmission rate information $m_k(n)$ of downlink channels fed back from the MSs.

11. The method of claim 10, wherein the step of generating comprises generating a uniform random variable $U_k(n)$ by using the transmission rate information received from each MS.

12. The method of claim 11, wherein the step of converting comprises converting the uniform random variable $U_k(n)$

into a scheduling priority $U_k(n)^{1/w_k}$.

**13.** The method of claim 12, wherein said step of comparing comprises comparing the scheduling priority $U_k(n)^{1/w_k}$ of each MSs with each other.

**14.** The method of claim **13,** wherein said step of assigning comprises assigning the n-th timeslot to an MS having a highest scheduling priority $U_k(n)^{1/w_k}$, where

$$\sum_{k=1}^{K} w_m = 1 .$$

**15.** The method of claim 14, wherein the uniform random variable $U_k(n)$ is a cumulative distribution function $F_{R_k}(r)$ of transmission rates $R_k(n)$ corresponding to the transmission rate information $m_k(n)$ .

**16.** The method of claim 14, further comprising the step of updating the cumulative distribution function $F_{R_k}(r)$ .

**17.** The method of claim 16, wherein the cumulative distribution function $F_{R_k}(r)$ update is based on a probability density function of the transmission rates.

**18.** The method of claim 17, wherein the cumulative distribution function $F_{R_k}(r)$ update includes the step of updating the probability density function.

**19.** The method of claim 18, wherein the probability density function $P_{k,m}$ is updated based on: $p_{k,m} \leftarrow \lambda p_{k,m} + (1- \lambda) 1_{m=m_k(n)}$, where $\lambda$ is $0 < \lambda < 1$, A represents the condition $m=m_k(n)$, and $1_A$ is an indicator which is '1' when the condition 'A' is satisfied or is '0' when the condition 'A' is not satisfied, if the probability density function is set to $p_{k,m} \equiv \Pr(R_k(n) = r_{k,m})$ and the cumulative distribution function $q_{k,m}$ is set to

$$q_{k,m} \equiv \sum_{i=1}^{m} p_{k,i}$$

; and the cumulative distribution function is updated based on:

$$q_{k,m} \leftarrow \sum_{i=1}^{m} p_{k,i} \ .$$

**20.** The method of claim 14, wherein the uniform random variable $U_k(n)$ is a cumulative distribution function $F_{R_k}(r)$ of the transmission rate information $m_k(n)$.

**21.** The method of claim 20, wherein updating the probability density function is carried out using a probability density function of the transmission rate.

**22.** The method of claim 20, wherein the cumulative distribution function is updated using a probability density function of the transmission rate.

**23.** The method of claim 21, wherein the probability density function is updated based on: $p_{k,m} \leftarrow \lambda p_{k,m} + (1-\lambda) 1_{m=m_k(n)}$, where, $\lambda$ is $0 < \lambda < 1$ , A represents the condition $m=m_k(n)$, and $1_A$ is an indicator which is '1' when the condition 'A' is satisfied or is '0' when the condition 'A' is not satisfied, if the probability density function is set to $P_{k,m} \equiv Pr(R_k(n) = r_{k,m})$ and the cumulative distribution function $q_{k,m}$ is set to

$$q_{k,m} \equiv \sum_{i=1}^{m} p_{k,i}$$

; and the cumulative distribution function is updated based on:

$$q_{k,m} \leftarrow \sum_{i=1}^{m} p_{k,i} \ .$$

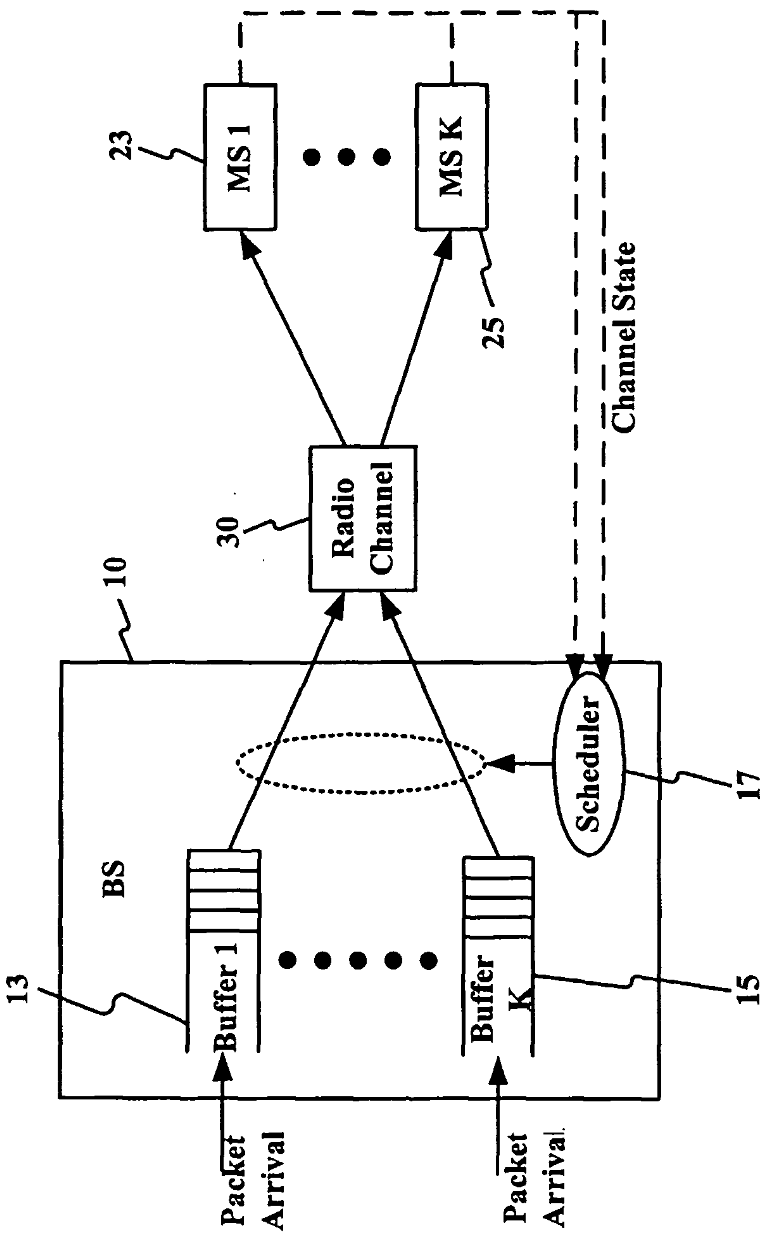
10
BS
13
Buffer 1
15
Buffer K
17
Scheduler
Packet Arrival
Packet Arrival
30
Radio Channel
23
MS 1
25
MS K
Channel State

FIG. 1

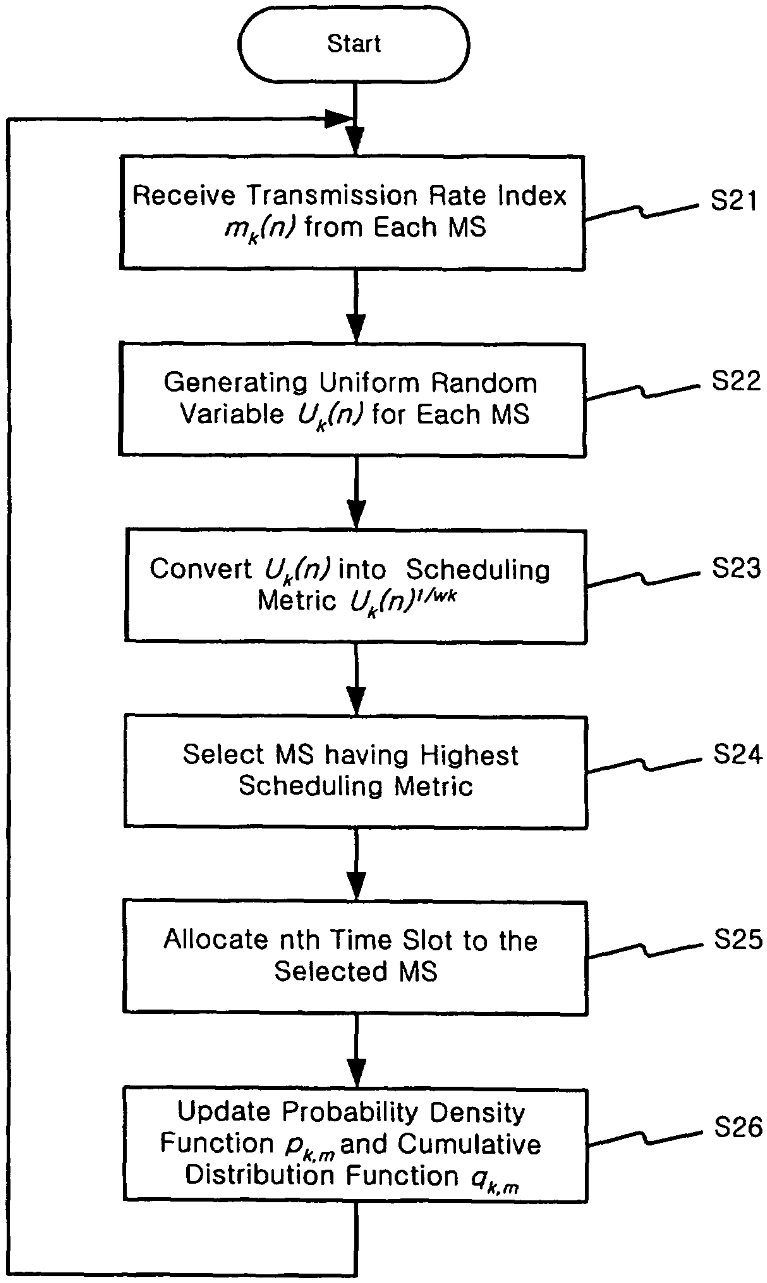
Start
Receive Transmission Rate Index $m_k(n)$ from Each MS
S21
Generating Uniform Random Variable $U_k(n)$ for Each MS
S22
Convert $U_k(n)$ into Scheduling Metric $U_k(n)^{1/wk}$
S23
Select MS having Highest Scheduling Metric
S24
Allocate nth Time Slot to the Selected MS
S25
Update Probability Density Function $p_{k,m}$ and Cumulative Distribution Function $q_{k,m}$
S26

FIG.2

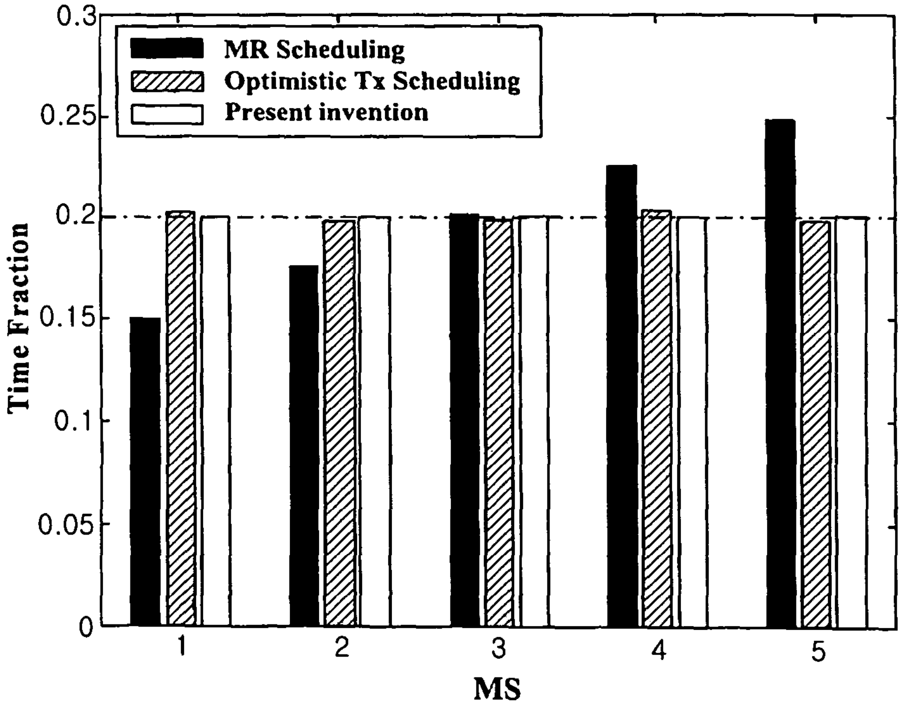
MR Scheduling
Optimistic Tx Scheduling
Present invention
Time Fraction
0.3
0.25
0.2
0.15
0.1
0.05
0
1
2
3
4
5
MS

FIG.3

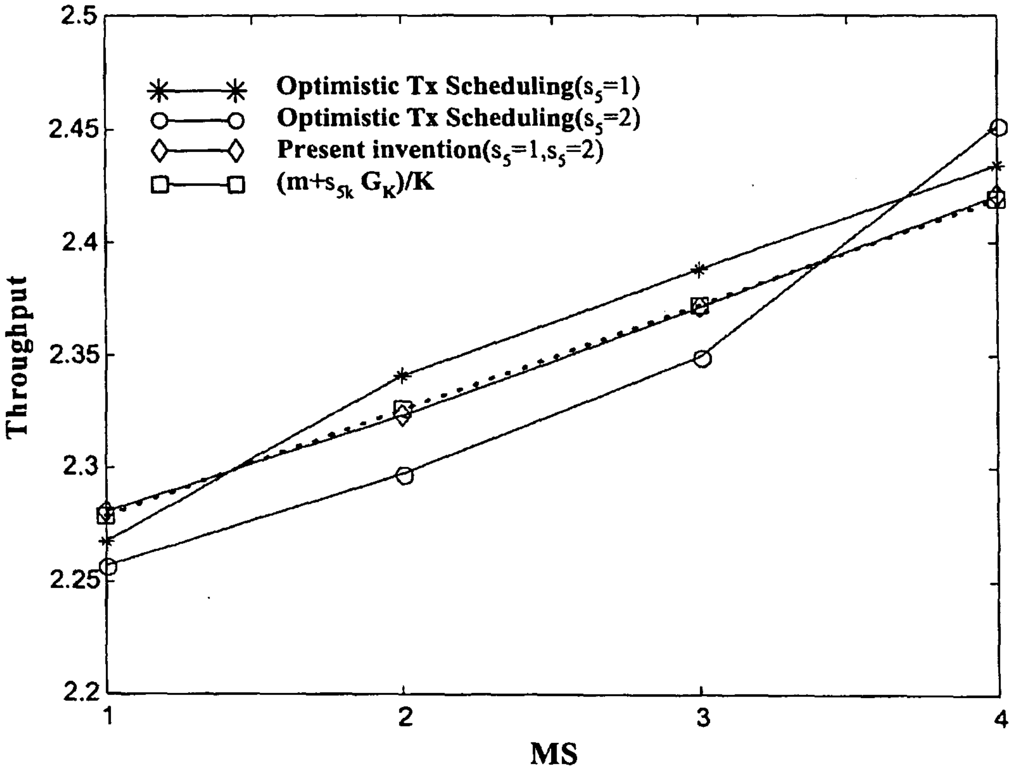
Optimistic Tx Scheduling(s5=1)
Optimistic Tx Scheduling(s5=2)
Present invention(s5=1,s5=2)
(m+s5k GK)/K
Throughput
MS
2.5
2.45
2.4
2.35
2.3
2.25
2.2
1
2
3
4

FIG.4